# EUROPÄISCHE PATENTSCHRIFT

(11) **EP 1 406 839 B1**
(45) Veröffentlichungstag und Bekanntmachung des Hinweises auf die Patenterteilung: **02.08.2006**
(21) Anmeldenummer: 02740746.9
(22) Anmeldetag: 24.06.2002
(51) Int. Cl.: C01G 53/04, H01M 4/52

(54) **NICKELHYDROXID UND VERFAHREN ZU DESSEN HERSTELLUNG**
NICKEL HYDROXIDE AND METHOD FOR PRODUCING THE SAME
HYDROXYDE DE NICKEL ET PROCEDE PERMETTANT DE LE PRODUIRE

(30) Priorität: 06.07.2001 DE 10132895
(43) Veröffentlichungstag der Anmeldung: 14.04.2004
(73) Patentinhaber: H.C. Starck GmbH, 38642 Goslar (DE)
(72) Erfinder: OLBRICH, Armin, 38723 Seesen (DE); MEESE-MARKTSCHEFFEL, Juliane, 38642 Goslar (DE); STOLLER, Viktor, 38667 Bad Harzburg (DE); ERB, Michael, 38259 Salzgitter (DE); ALBRECHT, Sven, 38642 Goslar (DE); GILLE, Gerhard, 38640 Goslar (DE); MAIKOWSKE, Gerd, 38640 Goslar (DE); SCHRUMPF, Frank, 38642 Goslar (DE); SCHMOLL, Josef, 38642 Goslar (DE); JAHN, Matthias, 38642 Goslar (DE)
(74) Vertreter: Peters, Frank M.
(86) Internationale Anmeldenummer: PCT/EP2002/006947
(87) Internationale Veröffentlichungsnummer: WO 2003/004418

(56) Entgegenhaltungen:
- EP-A- 0 856 899
- EP-A- 1 103 526
- US-A- 5 498 403

## Beschreibung

Die vorliegende Erfindung betrifft ein Verfahren zur Herstellung von Nickelhydroxid und neuartige Nickelhydroxide für den Einsatz als Aktivmasse in wiederaufladbaren Batterien.

Es ist bekannt, Nickelhydroxide durch Fällung aus Nickelsalzlösungen mit Alkalihydroxiden in Gegenwart von Ammoniak bei gleichzeitiger Erzeugung hoher Scherkräfte in der Fällungslösung herzustellen. Dabei entstehen angenähert kugelförmige Nickelhydroxid-Teilchen mit Durchmessern zwischen 5 und 15 µm. Die kugelförmigen Nickelhydroxid-Teilchen sind aus Primärkristallen einer Kristallitgröße in der Größenordnung von 100 Å, daraus durch Stapelung gebildeten Sekundärteilchen der Größenordnung von einigen 100 nm aufgebaut, die wiederum zu den kugelförmigen Tertiärteilchen agglomeriert sind.

Während Größe und Defektstruktur der Primärkristalle unmittelbar durch die Fällungsbedingungen am Ort des Zusammentreffens der Reaktanten, d.h. von der lokalen Übersättigung und Keimbildungshäufigkeit, abhängt, sind Größe und Morphologie der Tertiärpartikel im wesentlichen durch die stationären Strömungsbedingungen im Reaktor bestimmt, wobei eine gewisse Abhängigkeit von der Primärkristallgröße besteht.

Wiederaufladbare Batterien auf Ni-Basis nutzen den reversiblen Redoxvorgang zwischen Nickel(II)hydroxid und Nickel(III)oxyhydroxid. Das Nickeloxyhydroxid wird bei der Entladung durch Aufnahme eines Protons aus dem umgebenden Elektrolyten und eines Elektrons von der mit der Aktivmasse in Kontakt stehenden Ableiterelektrode zum Nickelhydroxid reduziert, welches zuvor beim Ladevorgang zum Oxyhydroxid oxidiert wurde.

Eine die Entladecharakteristik der Aktivmasse limitierende Eigenschaft ist die Protonenleitfähigkeit des Materials. Sie wird sowohl durch die Vielzahl von Korngrenzen und Defekten aufgrund des Materialaufbaus aus feinen Kristalliten als auch durch eine Porenstruktur, in die der Elektrolyt eindringen kann, begünstigt.

Der oben beschriebene klassische 1-Elektronenschritt (reversible Oxidation von Ni²⁺ zum Ni³⁺, β-Phasen-Zyklisierung) ist überlagert durch eine durch die Defektstruktur begünstigte partielle Ausbildung von γ-Phasen (α-γ-Zyklisierung mit partieller Oxidation zum Ni⁴⁺), die einen 1,67-Elektronen-Schritt erlaubt, so dass die tatsächliche Nickelausnutzung, d.h. die 1-Elektronenschritte pro Nickelatom, den Wert von 100 % übersteigen kann.

Je kleiner die Primärkristallgröße ist, desto höher ist die Anfangs-Lade-/Entlade-Kapazität. Große Primärkristalle führen dagegen zu einer besseren Langzeitstabilität der Lade-/Entlade-Kapazität ("Zyklenbeständigkeit").

Eine weitere wichtige Kenngröße der Nickelhydroxidpulver ist die Klopfdichte, die mit der Tertiärteilchengröße korreliert. Die Tertiärteilchengröße hängt wiederum von der Primärkristallgröße ab, da offenbar bei kleiner Primärteilchengröße die Agglomerate bereits bei kleineren Abmessungen "glatt" erscheinen, d.h. zu wenig Verankerungsmöglichkeiten auf ihrer Oberfläche für die weitere Anlagerung von Primär- bzw. Sekundärteilchen bieten. Ferner kann das Agglomeratwachstum durch einen hohen Ammoniakgehalt aufgrund oberflächlicher Komplexbildung beeinffusst werden.

Für die gezielte Beeinflussung der Zusammenführung der Reaktionspartner für die Fällungsreaktion bestehen mehrere Möglichkeiten: Beispielsweise kann bei Einleiten einer Nickelsalzlösung in eine alkalische, Ammoniak enthaltende Lösung durch Wahl des pH-Wertes zwischen 9 und 14 die anfängliche Übersättigung bzw. Keimbildungsrate derart eingestellt werden, dass die gewünschte Primärkristallgröße erhalten wird. Bei Einleiten eines Nickelamminkomplexes, beispielsweise eines Nickelhexamminkomplexsalzes, in den Fällungsreaktor wird die anfängliche Übersättigung der Lösung dadurch verzögert, dass zunächst ein Abbau des Hexamminkomplexions zum Hexaquokomplexion über mehrere Stufen erforderlich ist, wobei zur Erzielung einer ausreichenden Übersättigung die alkalische Lösung einen höheren pH-Wert aufweisen kann. Zusätzlich besteht die Steuerungsmöglichkeit über die gewählte Temperatur im Fällungsreaktor, wobei höhere Temperaturen zu größeren Primärkristallen führen.

Die gegenläufigen Tendenzen, die die Defekt- und Korngrenzendichten auf die Kurz- und Langzeitkapazität sowie die Verarbeitbarkeit (Elektrodenpastierung) der Nickelhydroxide haben, bestimmen und beschränken letztlich das Leistungsverhalten sphärischer Nickelhydroxide auf den gegenwärtig erreichten Stand. Hinsichtlich der mikroskopischen und mesoskopischen Struktur wird demgemäß das optimale Leistungsverhalten der sphärischen Nickelhydroxide bis dato durch einen Kompromiss erreicht. Die Kristallitgrößen, die eigentlich so klein wie möglich und die Defektdichten, die so hoch wie möglich sein sollten, werden je nach Verfahren so eingestellt, dass ein ausreichend gutes Agglomerierverhalten zu guten Klopfdichten führt und das Langzeitverhalten den Anforderungen an eine hinreichend oft wiederaufladbare Batterie genügt. Letztlich muss die volumenspezifische Kapazität Cᵥ, die sich formal aus der massenspezifischen Kapazität Cₘ multipliziert mit der Klopfdichte ρₖ ergibt, für einen möglichst breiten Bereich an Zyklenzahlen möglichst groß werden.

Aufgabe der vorliegenden Erfindung ist es, die Grenzen des bisher erforderlichen Kompromisses zu überwinden. Eine weitere Aufgabe der Erfindung besteht darin, langzeitstabile Nickelhydroxide mit höherer volumenspezifischer Kapazität zur Verfügung zu stellen.

Es wurde nun gefunden, dass dies gelingt, wenn die Fällung der Nickelhydroxid-Primärkristalle im wesentlichen zeitgleich bei unterschiedlicher Fällungskinetik derart durchgeführt wird, dass die Primärkristalle unterschiedliche Abmessungen aufweisen und die Suspension mit diesen Primärkristallen vor der Agglomeration der Primärkristalle vermischt wird, so dass die Sekundär- und/oder Tertiärteilchen aus Primärkristallen mit breiter Größenverteilung aufgebaut sind. Gemäß der Erfindung wird die unterschiedliche Fällungskinetik an unterschiedlichen Orten in dem Fällungsreaktor erzeugt.

Gegenstand der vorliegenden Erfindung ist dem gemäß ein Verfahren zur Herstellung von sphärischem Nickelhydroxid durch alkalische Fällung aus Nickelsalzlösungen in Gegenwart von Komplexbildnern, das dadurch gekennzeichnet ist, dass die Fällung an mindestens zwei verschiedenen Orten mit unterschiedlicher Fälhmgskmenk in derselben Mutterlauge stattfindet und die Mutterlauge vor der Agglomeration der gefällten Primärkristalle vermischt wird.

Erfindungsgemäß erfolgt die Agglomeration der Primärkristalle in einem gerührten Behälter, der die Mutterlauge enthält. Die Mutterlauge weist vorzugsweise einen Neutralsalzgehalt in einer Menge von 0,2 bis 2 Mol/l an Alkalisalzen, vorzugsweise Alkalichlorid und/oder Alkalisulfat, 0,2 bis 1 Mol/l Ammoniak sowie 0,08 bis 2, vorzugsweise 0,08 bis 0,15 Mol/l Alkalihydroxid, vorzugsweise Natriumhydroxid, auf.

Erfindungsgemäß werden nun über mehrere, örtlich getrennte Einleitorgane Nickelsalzlösungen derart in die Mutterlauge eingeleitet, dass an den unterschiedlichen, örtlich getrennten Einleitstellen unterschiedliche Fällungsbedingungen erzeugt werden.

Nach einer ersten erfindungsgemäßen Ausführungsform werden an den örtlich getrennten Einleitstellen Nickelsalzlösungen mit unterschiedlicher Nickelsalzkonzentration eingeleitet.

Nach einer weiteren Ausführungsform der Erfindung werden an den örtlich getrennten Einleitstellen Nickelsalzlösungen mit unterschiedlicher Temperatur eingeleitet.

Nach einer weiteren Ausführungsform der Erfindung werden an den örtlich getrennten Einleitstellen Nickelsalzlösungen mit unterschiedlich schneller Vermischung mit der Mutterlauge eingeleitet.

Nach einer weiteren Ausführungsform der Erfindung werden an den örtlich getrennten Einleitstellen gleichzeitig Alkalilösungen mit unterschiedlichem pH-Wert eingeleitet.

Nach einer weiteren Ausführungsform der Erfindung werden an den örtlich getrennten Einleitstellen Nickelsalzlösungen mit unterschiedlichen Konzentrationen an 3-wertigen Fremdmetallionen mit vom Nickel verschiedenen Ionenradius, die als Kristallwachstumsinhibitoren wirken, eingeleitet. Geeignete Fremdmetallionen sind B, Al, In, Tl, Se, Y, La, Lanthanoide und/oder Bi.

Nach einer besonders bevorzugten Ausführungsform der Erfindung werden an den örtlich getrennten Einleitstellen Nickelamminkomplexlösungen mit unterschiedlichem Konzentrationsverhältnis von Ammoniak zu Nickel eingeleitet. Vorzugsweise beträgt das Verhältnis von Ammoniak zu Nickel an einer Einleitstelle mindestens 4, vorzugsweise mindestens 5, und an einer zweiten Einleitstelle maximal 2, vorzugsweise maximal 1, insbesonders bevorzugt etwa 0. An einer dritten und weiteren Einleitstelle liegt das Ammoniak zu Nickel-Verhältnis zwischen den beiden oben genannten Extremen.

Alle die genannten Maßnahmen bewirken an den örtlich getrennten Einleitstellen eine unterschiedliche Fällungskinetik und damit die Erzeugung unterschiedlich großer Pimärkristalle. Die Wirkung im Hinblick auf die unterschiedliche Fällungskinetik wird vorzugsweise dadurch verstärkt, dass mehrere der Maßnahmen unterschiedliche Konzentrationen, unterschiedliche Temperatur, unterschiedliche Vermischungsgeschwindigkeit, unterschiedlicher pH-Wert und unterschiedliche Komplexierung im Sinne einer Verstärkung des Unterschiedes der Fällungskinetik an den jeweiligen Einleitstellen kombiniert werden.

So ist es besonders bevorzugt, wenn die Lösung mit dem höchsten Ammoniak-Nickel-Verhältnis eine geringere Nickelkonzentration aufweist als die Lösung mit dem geringsten Ammoniak-Nickel-Verhältnis.

Ferner wird der Unterschied in der Fällungskinetik dadurch erhöht, dass die Lösung mit dem geringsten Ammoniak-Nickel-Verhältnis bei höherer Temperatur eingeleitet wird, als die Lösung mit dem höheren Ammoniak-Nickel-Verhältnis.

Ferner kann der Unterschied in der Fällungskinetik an den örtlich getrennten Einleitstellen dadurch erhöht werden, dass die Lösung mit dem geringsten Ammoniak-Nickel-Verhältnis schneller mit der Mutterlauge vermischt wird, als die Lösung mit höherem Ammoniak-Nickel-Verhältnis.

Darüber hinaus kann der Unterschied in der Fällungskinetik dadurch erhöht werden, dass an der Einleitstelle für die Lösung mit dem geringsten Ammoniak-Nickel-Verhältnis ein höherer pH-Wert erzeugt wird, als an den Stellen mit höherem Ammoniak-Nickel-Verhältnis.

Erfindungsgemäß kann die Einleitung in die Mutterlauge im gerührten Behälter selbst oder in einer außerhalb des Behälters geführten Schlaufenleitung, über die die Mutterlauge umgepumpt wird durch mehrere hintereinander in der Schlanfenleitung angeordnete Einleitorgane durchgeführt werden.

Vorzugsweise wird das erfindungsgemäße Verfahren kontinuierlich durchgeführt, wobei in dem gerührten Behälter eine Mutterlaugensuspension mit 25 - 125 g/l Nickelhydroxid aufrechterhalten wird. Dies kann durch geeignete Abtrennungen der Mutterlauge aus der Suspension mittels geeigneter Filter, Zyklone oder Zentrifugen erfolgen. Beispielweise erfolgt die Fraktionierung derart, dass Nickelhydroxidteilchen mit einem Durchmesser von 5 bis 20 µm als Produkt gewonnen wird, eine Fraktion mit kleineren Nickelhydroxid-Teilchen in den gerührten Behälter zurückgeführt wird und eine dritte Fraktion aus im wesentlichen von Nickelhydroxid befreiter Mutterlauge aus dem Prozess ausgeschleust wird.

Gegenstand der Erfindung ist weiter ein Verfahren dadurch gekennzeichnet, dass zur Optimierung der anwendungstechnischen Eigenschaften des Nickelhydroxid-Materials in der Elektrode zweiwertige Dotiersubstanzen wie Co, Zn, Mg, Ca, Sr und/oder Ba in Mengen von 0,3 bis 7 Gew.-% in das Nickelhydroxid eingebaut werden.

Gegenstand der Erfindung sind weiterhin Nickelhydroxide, die nach dem erfindungsgemäßen Verfahren erhältlich sind. Die Herstellung des Nickelhydroxids durch alkalische Fällung, wobei diese an mindestens zwei verschiedenen Orten mit unterschiedlicher Fällungskinetik in derselben Mutterlauge durchgeführt wird, führt zur Erzeugung unterschiedlich großer Pimärkristalle. Die erfindungsgemäßen Nickelhydroxide weisen daher eine Teilchengrößenverteilung der Primärkristalle auf, die multimodal, d.h. mindestens bimodal ist. Die Modalität der Teilchengrößenverteilung entspricht in der Regel der Anzahl der Orte mit unterschiedlicher Fällungskinetik, an denen die alkalische Fällung durchgeführt wird.

Die Nickelhydroxide zeichnen sich beim Einsatz als Aktivmasse in wiederaufladbaren Batterien durch eine hohe Volumenkapazität und hohe Zyklenstabilität aus. In offenen Testzellen wird eine Kapazität von mindestens 107 %, vorzugsweise von mindestens 108 % bezogen auf den 1-Elektronenschritt des Nickels im 2. Lade-/Entladezyklus erhalten.

Bei der Bestimmung der Kapazität in offenen Testzellen wird wie folgt vorgegangen: Zur Herstellung von Elektrodenrohlingen werden aus Nickelschaum mit einem Locheisen (Durchmesser: 35 mm) runde Scheiben ausgestanzt, aus Nickelblech (Reinheit 99,0 %) schmale Streifen (ca. 4 mm breit) abgeschnitten und mit einem Punktschweißgerät tangential an die Nickelschaumscheiben angeschweißt.

Zur Herstellung einer Paste für die negativen Elektroden werden 100,0 g Metallhydrid-Pulver, 3,0 g Ni-Pulver, 16,0 g Carboxymethylcellulose-Lösung (5 gew.-%ig), 5,0g vollentionisiertes Wasser und 5,2g Teflonlösung (Dyneon® TF 5032 PTFE; 60 gew.-%ig) verwendet. Zunächst werden die Bestandteile der Paste mit Ausnahme der Teflonlösung vermischt, dann wird die Teflonlösung hinzugegeben und nochmals vermischt. Die Paste wird mit einem Spatel auf 2 Nickelschaum-Elektroden pastiert, die Elektroden getrocknet und mit einem Druck von 15*10⁴N gepresst.

Die Nickelblech-Streifen zweier negativer Elektroden werden so zusammengeschweißt, dass sich die Ni-Schäume und die Nickelblech-Streifen direkt übereinander befinden.

Zur Herstellung der positiven Elektroden werden bei Verwendung von nicht-beschichteten Nickelhydroxiden 20,0 g Nickelhydroxid, 2,0 g Cobaltsuboxid, 4,0 g Carboxymethylcellulose-Lösung (5 gew.-%ig), 2,2 g vollentionisiertes Wasser und 1,1 g Teflonlösung (Dyneon® TF 5032 PTFE; 60 gew.-%ig) verwendet. Bei Einsatz beschichteter Nickelhydroxide werden 22,0 g Nickelhydroxid ohne Zusatz von Cobaltsuboxid eingesetzt, die anderen Mengenanteile der Paste bleiben gleich. Die Bestandteile der Paste mit Ausnahme der Teflonlösung werden vermischt, dann wird die Teflonlösung hinzugegeben und nochmals vermischt. Die Paste wird mit dem Spatel in die Nickelschaum-Elektrode einpastiert, die Elektrode getrocknet, mit einem Druck von 15*10⁴N gepresst, in ein Polypropylenvlies als Separator eingewickelt und der Separator am Rand verschweißt. Die Elektroden werden zu einem Paket gestapelt (die positive Elektrode in der Mitte und die beiden negativen Elektroden oben und unten) und dieses Elektrodenpaket ebenfalls mit Polypropylenvlies als Separator eingewickelt und am Rand verschweißt.

Das Elektrodenpaket wird zusammen mit 5 Silicongummischeiben in die Messzelle eingebaut (die Silicongummischeiben dienen als Platzhalter und sollen den Druck der verschlossenen Messzelle auf die Elektrodenflächen übertragen). Die Messzelle wird mit einem Deckel verschlossen und mit Schrauben mit einem Drehmoment von 2 Nm angezogen. Als Elektrolyt werden 5 ml einer Alkalihydroxid-Lösung (7,2 M KOH und 1,0 M LiOH) in die Messzelle eingefüllt.

Für die Messung wird die positive Elektrode (Nickelhydroxid-Elektrode) als Arbeitselektrode und die negative Elektrode (Metallhydrid-Elektrode) als Gegenelektrode angeschlossen. Als Standard-Messprogramm wird über 50 Zyklen für 15 h mit einer Stromstärke von 0,1 C geladen, wodurch sich eine 1,5-fache Überladung ergibt, und mit der gleichen Stromstärke bis 1,0 V entladen.

Die hohe Zyklenstabilität zeigt sich darin, dass das Nickelhydroxid auch im 30. Lade-/Entladezyklus noch eine Kapazität von mindestens 95 %, vorzugsweise von mindestens 98 % bezogen auf den 1-Elektronenschritt des Nickels aufweist.

Aufgrund dieser Eigenschaften kann das Nickelhydroxid beispielsweise als Aktivmasse in wiederaufladbaren Batterien eingesetzt werden.

Die Erfindung wird anhand der nachfolgenden Figuren ohne Beschränkung der Allgemeinheit weiter erläutert:
- Fig. 1: zeigt ein erste Ausführungsform der Erfindung, wobei die unterschiedliche Fällungskinetik an den örtlich getrennten Einleitstellen durch Einleitung unterschiedlich konzentrierter Nickelsalzlösungen bzw. Nickelsalzlösungen mit unterschiedlichem Komplexierungsgrad erfolgt.
- Fig. 2: zeigt eine Ausführungsform der Erfindung, bei der die unterschiedliche Fällungskinetik durch unterschiedlich schnelle Vermischung der Nickelsalzlösung mit der Mutterlauge an den örtlich getrennten Einleitstellen erfolgt.
- Fig. 2a: zeigt perspektivisch ein Detail A der Figur 2.
- Fig. 3: zeigt eine Ausführungsform der Erfindung, nach der an den örtlich getrennten Einleitstellen ein unterschiedlicher pH-Wert erzeugt wird.
- Fig. 4: zeigt eine Ausführungsform der Erfindung unter Einsatz eines Schlaufenreaktors.

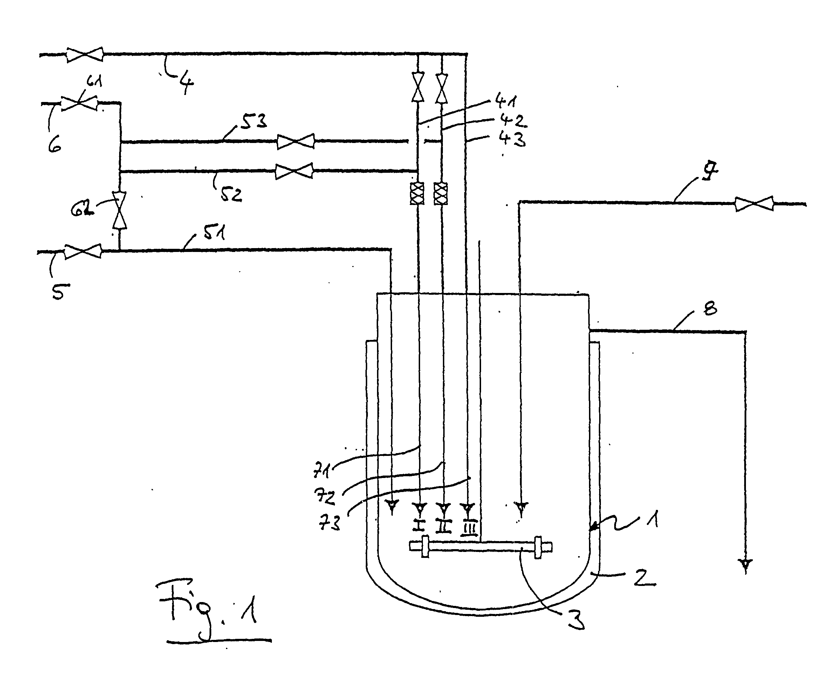

Figur 1 zeigt den die Mutterlauge enthaltenden Behälter 1, der eine Thermostatisierung 2 und einen Rührer 3 aufweist. In den Behälter 1 wird über Leitung 4 Nickelsalzlösung nach Auftrennung in die Teilströme 41, 42 und 43 eingeleitet. Über Leitung 51 wird Ammoniak-Lösung und über Leitung 9 Alkalihydroxidlösung in die Mutterlauge eingeleitet. Die Nickelhydroxid-teilchen-haltige Mutterlaugensuspension läuft über Leitung 8 über.

Zur Darstellung unterschiedlicher Fällungskinetiken an den Einleitstellen (I), (II) und (III) werden über die Zufuhrleitungen 71, 72 und 73 Nickelsalzlösungen mit unterschiedlicher Konzentration und/oder unterschiedlichem Amminkomplexierungsgrad eingeleitet. Dies kann einerseits dadurch erfolgen, dass bei geschlossenem Ventil 62 über Leitung 6 die Teilströme 41 und 42 der Nickelsalzlösung mit unterschiedlichen Mengen an Verdünnungslösung 52 bzw. 53 vermischt werden, bzw. bei geschlossenem Ventil 61 und geöffnetem Ventil 62 mit unterschiedlichen Mengen Ammoniaklösung vermischt werden.

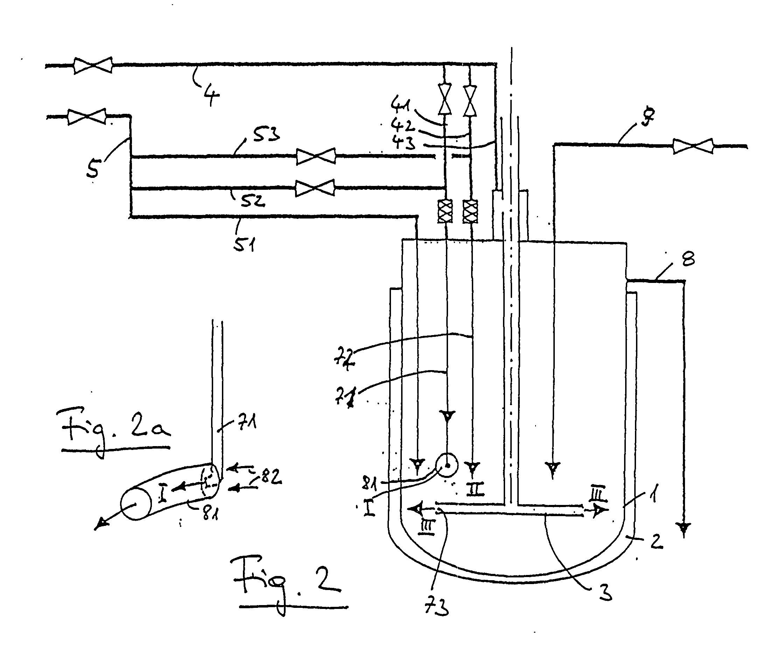

Figur 2 zeigt eine Darstellung analog Figur 1, wobei gleiche Bezugszeichen analoge Elemente bezeichnen. Ein Nickelsalzteilstrom wird über den Hohlrührer (Leitung 73) eingeleitet, wobei eine besonders schnelle Vermischung mit der Mutterlauge im Bereich der Einleitstellen (III) erfolgt. Der Nickelsalzteilstrom 41 mündet über Leitung 71 in einem zur Achse des Rührers 3 tangentialem Strömungsrohr 81, in das wie durch Pfeile 82 (Figur 2a) angedeutet, Mutterlauge eintritt, so dass der Teilstrom 41 während der Keimbildungsphase lediglich mit der durch das Strömungsrohr 81 hindurchtretenden Mutterlauge vermischt wird. An den Einleitstellen (I) und (III) werden demgemäß stark unterschiedliche Vermischungsgeschwindigkeiten und damit Fällungskinetiken bewirkt. Die Teilströme 41, 42 und 43 können auch einen unterschiedlichen Amminkomplexierungsgrad durch Vermischung mit unterschiedlichen Teilmengen Ammoniaklösung 52 und 53 aufweisen.

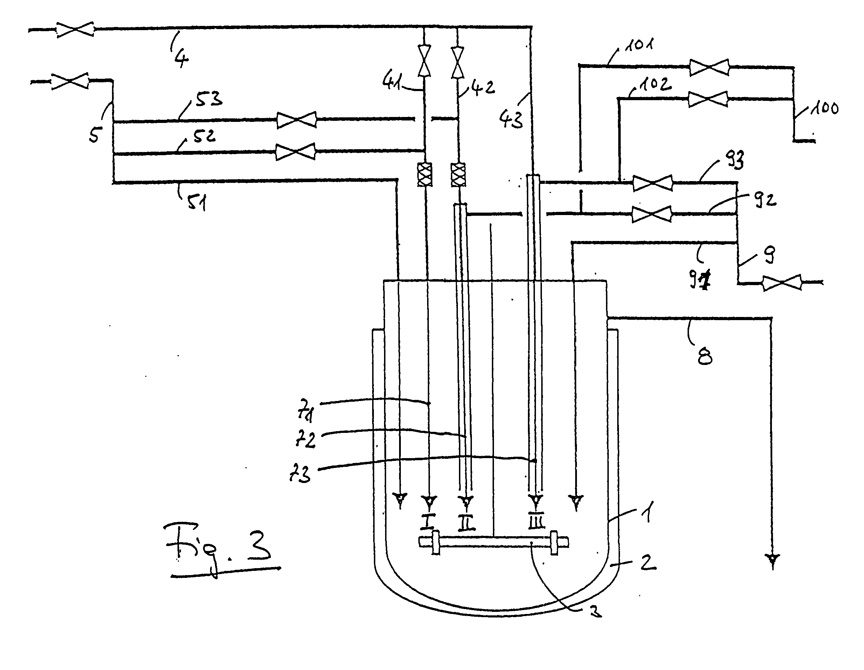

Figur 3 zeigt ein analoge Darstellung wie Fig. 2, wobei hier die unterschiedliche Fällungskinetik an den Einleitstellen (I), (II) und (III) für die Nickelsalzteilströme 41, 42 und 43 dadurch erzeugt wird, dass an den Einleitstellen (II) und (III) ein unterschiedlicher pH-Wert dadurch erzeugt wird, dass konzentrisch zur Einleitung der Nickelsalzlösungen Alkalihydroxidlösungen mit unterschiedlichem pH-Wert eingeleitet werden. Dies erfolgt durch Aufteilung der Alkalihydroxidleitung 9 in Teilströme 91, 92 und 93, gegebenenfalls unter Verdünnung mittels einer Verdünnungslösung 100, vorzugsweise aus rückgeführter Mutterlauge.

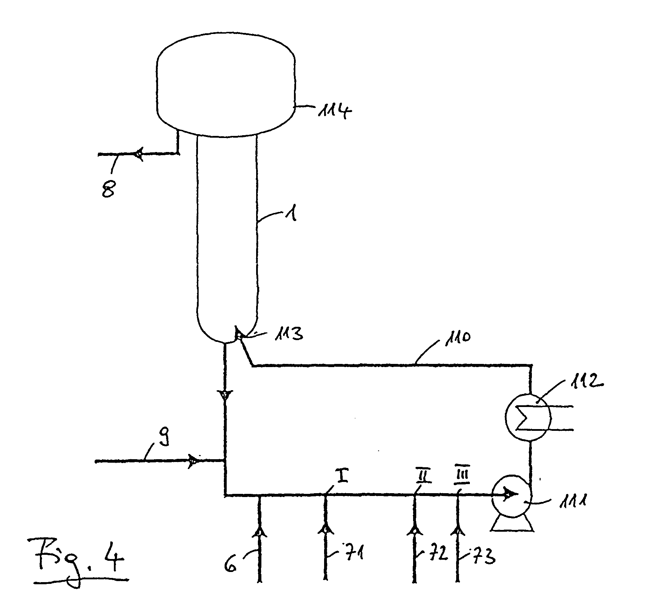

Figur 4 zeigt eine weitere Ausführungsform zur Herstellung des erfindungsgemäßen Produktes bei der ein als Treibstrahlreaktor ausgebildeter Schlaufenreaktor mit externer Schlaufe 110, die eine Pumpe 111 und einen Wärmetauscher 112 aufweist, eingesetzt wird. Die Schlaufe 110 weist Zuleitungen für Alkalilauge 9, für Ammoniaklösung 6 sowie für unterschiedlich amminkomplexierte Nickelsalzlösungen 71, 72 und 73 auf, wobei an den Einleitstellen (I), (II) und (III) eine unterschiedliche Fällungskinetik erzeugt wird. Die Agglomerierung erfolgt in dem zylindrischen Behälter 1, in den die Primärteilchensuspension über eine Düse 113 unter Erzeugung lokal hoher hydrodynamischer Scherleistung injiziert wird. Der austeroide Kopf 114 des Mutterlaugenbehälters 1 ist für evtl. Verdampfungsvorgänge zur Einstellung der Feststoffdichte und Entfernung von überschüssigem Ammoniak ausgelegt.

Die Erfindung wird weiterhin durch die nachfolgenden Beispiele und Vergleichsbeispiele erläutert:

### Beispiele

### (Erfindungsgemäßes) Beispiel 1

In einen Rührreaktor gemäß Fig. 1 mit einem Nutzvolumen von 201 werden bei einer konstanten Temperatur von 60°C und einer Rührerdrehzahl von 800 Umdrehungen pro Minute (upm) über die Zuleitung 4 1 l/h einer Nickelsalzlösung mit 105,4 g/l NiSO₄ und 35 g/l NaCl so in Teilströme aufgeteilt, dass der Nickelteilstrom 41 150 ml/h, der Nickelteilstrom 42 250 ml/h und der Nickelteilstrom 43 600 ml/h beträgt. Über die Zuleitung 6 werden dem Reaktorsystem 80 ml/h wässrige Ammoniaklösung mit einer Ammoniakkonzentration von 200 g/l zugeführt und so in Teilströme aufgeteilt, dass der Ammoniakstrom 53 zu 30 ml/h, der Ammoniakteilstrom 52 zu 40 ml/h und der Ammoniakteilstrom 51 zu 10 ml/h eingestellt wird. Über die Zuleitung 9 wird der Reaktor mit 2 l/h wässriger, neutralsalzhaltiger Natronlauge mit einer NaOH-Konzentration von 35 g/l NaOH und 20 g/l NaCl beschickt. Während der gesamten Versuchsdauer werden über einen, in die Reaktorsuspension gehängten PP-Membranfilterschlauch 2 l/h klare Mutterlauge aus dem Reaktor abgepumpt, um den Feststoffgehalt im Reaktor zu erhöhen. Nachdem der Reaktor einen stationären Zustand erreicht hat, wird die ablaufende eingedickte Suspension über einen Zeitraum von 12 h kontinuierlich über eine Labomutsche filtriert und anschließend der Filterkuchen zunächst mit 1 l Wasser, 1,5 l Waschwasser mit 0,5 g NaOH/l und nochmals mit 1,51 Wasser gewaschen. Nach 24-stündigem Trocknen im Trockenschrank bei 60°C erhält man 765 g eines gut fließfähigen, dunkelgrünen Nickelhydroxids mit einem D₅₀-Wert der Teilchengrößenverteilung von 11,8 µm und einer mittleren Kristallitgröße von 80 Å, welches in offenen Testzellen eine Kapazität von 109 %, bezogen auf den 1-Elektronenschritt (EES) des Nickels im 2. Zyklus und eine Kapazität von 99 % im 50. Zyklus aufweist.

### (Vergleichs-) Beispiel 2

Das erfindungsgemäße Beispiel 1 wird wiederholt, aber mit dem Unterschied, dass die Ventile im Feed-Zuleitungssystem so geschaltet werden, dass die gesamte Nickellösung direkt über Leitung 43 in den Reaktor fließt und eine Mischung der Ammoniaklösung mit der Nickellösung vor Eintritt in den Reaktor vermieden wird. Alle anderen Reaktorbedingungen entsprechen dem erfindungsgemäßen Beispiel 1, und nach Erreichen des stationären Zustandes wird wieder über 12 Stunden gesammelt und das Produkt analog aufgearbeitet. Man erhält 771 g fließfähiges Nickelhydroxid mit einem D₅₀-Wert der Teilchengrößenverteilung von 10,2 µm und einer mittleren Kristallitgröße von 58 Å, welches in offenen Testzellen eine Kapazität von 105 % EES im 3. Zyklus und eine Kapazität von 84 % im 50. Zyklus aufweist.

### (Vergleichs-) Beispiel 3

Das erfindungsgemäße Beispiel 1 wird wiederholt, nur mit dem Unterschied, dass die Ventile im Feed-Zuleitungssystem so geschaltet werden, dass die gesamte Nickellösung direkt über Leitung 42 und die gesamte Ammoniaklösung über Leitung 53 fließt, so dass der gesamte Nickelzustrom vor Eintritt in den Reaktor mit der gesamten Ammoniaklösung gemischt wird. Alle anderen Reaktorbedingungen entsprechen dem erfindungsgemäßen Beispiel 1 und nach Erreichen des stationären Zustandes wird wieder über 12 Stunden gesammelt und das Produkt analog aufgearbeitet. Man erhält 762 g fließfähiges Nickelhydroxid mit einem D₅₀-Wert der Teilchengrößenverteilung von 13,6 µm und einer mittleren Kristallitgröße von 158 Å, welches in offenen Testzellen eine Kapazität von 76 % EES im 3. Zyklus und eine Kapazität von 81 % im 10. Zyklus aufweist.

## Patentansprüche

1. Verfahren zur Herstellung von Nickelhydroxid durch alkalische Fällung aus Nickelsalzlösungen in Gegenwart von Komplexbildnern, **dadurch gekennzeichnet, dass** über mehrere, örtlich getrennte Einleitorgane Nickelsalzlösungen derart in die Mutterlauge eingeleitet wird, so dass die Fällung an mindestens zwei verschiedenen Orten mit unterschiedlicher Fällungskinetik in derselben Mutterlauge durchgeführt und die Mutterlauge vor der Agglomeration der gefällten Primärkristalle vermischt wird.

2. Verfahren nach Anspruch 1, **dadurch gekennzeichnet, dass** die unterschiedliche Fällungskinetik durch unterschiedliche Nickelionenkonzentration, unterschiedliche Alkalihydroxidkonzentration, unterschiedliche Komplexbildnerkonzentration, unterschiedliche Temperatur, unterschiedlich schnelle Vermischung mit der Mutterlauge und/oder durch unterschiedliche Fremdmetallionenkonzentration erzeugt wird.

3. Verfahren nach Anspruch 1 oder 2, **dadurch gekennzeichnet, dass** Nickelamminkomplex-Lösungen [Ni(NH₃)ₙ(H₂O)₆₋ₙ]²⁺ in eine alkalische Mutterlauge eingeleitet werden, wobei an verschiedenen Orten Lösungen mit unterschiedlichem mittleren Komplexierungsgrad n eingeleitet werden.

4. Verfahren nach Anspruch 3, **dadurch gekennzeichnet, dass** der unterschiedliche Komplexierungsgrad n durch unterschiedliche Temperatur und/oder unterschiedliches Ni/NH₃-Verhältnis der Lösungen erzeugt wird.

5. Verfahren nach einem der Ansprüche 1 bis 4, **dadurch gekennzeichnet, dass** an den unterschiedlichen Orten jeweils eine Nickelsalzlösung und eine alkalische Lösung eingeleitet wird, wobei die Alkalihydroxidkonzentration der alkalischen Lösungen unterschiedlich ist.

6. Verfahren nach Anspruch 5, **dadurch gekennzeichnet, dass** die Nickelsalzlösungen und die alkalischen Lösungen konzentrisch eingeleitet werden.

7. Verfahren nach einem der Ansprüche 1 bis 6, **dadurch gekennzeichnet, dass** als Fremdmetallionen 3-wertige Ionen mit stark von Ni unterschiedlichem Ionenradius wie B, Al, In, Tl, Sc, Y, La, Lanthanoide und/oder Bi in Mengen von 0,1 bis 3 Gew.-% bezogen auf Ni eingesetzt werden.

8. Verfahren nach einem der Ansprüche 1 bis 7, **dadurch gekennzeichnet, dass** zumindest eine der Einleitstellen mit einem Strömungsrohr versehen ist, so dass zunächst nur eine Vermischung mit einem lokal abgeschirmten Teil der Mutterlauge erfolgt.

9. Verfahren nach einem der Ansprüche 1 bis 8, **dadurch gekennzeichnet, dass** an zumindest einer Einleitstelle die Einleitung unter erhöhter Turbulenz erfolgt.

10. Verfahren nach einem der Ansprüche 1 bis 9, **dadurch gekennzeichnet, dass** zur Optimierung der anwendungstechnischen Eigenschaften des Nickelhydroxid-Materials in der Elektrode zweiwertige Dotiersubstanzen wie Co, Zn, Mg, Ca, Sr und/oder Ba in Mengen von 0,3 bis 7 Gew.-% in das Nickelhydroxid eingebaut werden.

11. Nickelhydroxid, **dadurch gekennzeichnet, dass** die Primärkristalle eine Teilchengrößenverteilung aufweisen, die mindestens bimodal ist.

12. Nickelhydroxid gemäß Anspruch 11, **dadurch gekennzeichnet, dass** das Nickelhydroxid eine Kapazität von mindestens 107 % bezogen auf den 1-Elektronenschritt des Nickels im 2. Lade-/Entladezyklus aufweist.

13. Nickelhydroxid gemäß Anspruch 12, **dadurch gekennzeichnet, dass** die Kapazität im 2. Lade-/Entladezyklus mindestens 108 % beträgt.

14. Nickelhydroxid nach einem der Ansprüche 11 bis 13, **dadurch gekennzeichnet, dass** das Nickelhydroxid eine Kapazität von mindestens 95 % bezogen auf den 1-Elektronenschritt des Nickels im 30. Lade-/Entladezyklus aufweist.

15. Verwendung von Nickelhydroxid nach einem der Ansprüche 11 bis 14 als Aktivmasse in wiederaufladbaren Batterien.

## Claims

1. A process for preparing nickel hydroxide by alkaline precipitation from nickel salt solutions in the presence of complexing agents, **characterised in that** nickel salt solutions are introduced into the mother liquor via several spatially separated inlet devices in such a way that precipitation takes place in at least two different locations, with different precipitation kinetics, in the same mother liquor and the mother liquor is mixed before agglomeration of the precipitated primary crystals.

2. A process according to Claim 1, **characterised in that** the different precipitation kinetics are produced by means of different nickel ion concentrations, different alkali hydroxide concentrations, different complexing agent concentrations, different temperatures, different rates of mixing with the mother liquor and/or different foreign metal ion concentrations.

3. A process according to Claim 1 or 2, **characterised in that** nickel-amine complex solutions [Ni(NH₃)ₙ(H₂O)₆₋ₙ]²⁺ are introduced into an alkaline mother liquor, wherein solutions with different mean degrees of complexing n are introduced at different locations.

4. A process according to Claim 3, **characterised in that** the different degrees of complexing n are produced by different temperatures and/or different Ni/NH₃ ratios in the solutions.

5. A process according to one of Claims 1 to 4, **characterised in that** a nickel solution and an alkaline solution are introduced at each different location, wherein the alkali hydroxide concentration of the alkaline solutions is different.

6. A process according to Claim 5, **characterised in that** the nickel salt solutions and the alkaline solutions are introduced concentrically.

7. A process according to one of Claims 1 to 6, **characterised in that** 3-valent ions with an ionic radius that is very different from that of Ni, such as B, Al, In, Tl, Sc, Y, La, lanthanoids and/or Bi, are used as the foreign metal ions in amounts of 0.1 to 3 wt.%, with respect to Ni.

8. A process according to one of Claims 1 to 7, **characterised in that** at least one of the inlet sites is provided with a flow tube so that mixing initially takes place with only a locally shielded portion of the mother liquor.

9. A process according to one of Claims 1 to 8, **characterised in that** introduction takes place under elevated turbulence at at least one inlet site.

10. A process according to one of Claims 1 to 9, **characterised in that**, to optimise the application-oriented properties of the nickel hydroxide material in electrodes, divalent doping substances such as Co, Zn, Mg, Ca, Sr and/or Ba are incorporated in the nickel hydroxide, in amounts of 0.3 to 7 wt.%.

11. Nickel hydroxide, **characterised in that** the primary crystals have a particle size distribution which is at least bimodal.

12. Nickel hydroxide in accordance with Claim 11, **characterised in that** the nickel hydroxide has a capacity of at least 107 % with respect to the 1-electron step for nickel in the 2nd charge/discharge cycle.

13. Nickel hydroxide in accordance with Claim 12, **characterised in that** the capacity in the 2nd charge/discharge cycle is at least 108 %.

14. Nickel hydroxide in accordance with Claims 11 to 13, **characterised in that** the nickel hydroxide has a capacity of at least 95 % with respect to the 1-electron step for nickel in the 30th charge/discharge cycle.

15. The use of nickel hydroxide according to one of Claims 11 to 14 as an active material in rechargeable batteries.

## Revendications

1. Procédé de production d'hydroxyde de nickel par précipitation alcaline à partir de solutions de sels de nickel en présence d'agents complexants, **caractérisé en ce qu'**on fait arriver des solutions de sels de nickel dans la liqueur-mère par plusieurs organes d'amenée séparés localement, de manière que la précipitation s'effectue sur au moins deux endroits différents avec une cinétique de précipitation différente dans la même liqueur-mère et cette dernière est mélangée avant l'agglomération des cristaux primaires précipités.

2. Procédé suivant la revendication 1, **caractérisé en ce que** la différence de cinétique de précipitation est produite par une différence de concentration des ions nickel, une différence de concentration en hydroxyde alcalin, une différence de concentration en agent de complexation, une différence de température, une différence de vitesse de mélange avec la liqueur-mère et/ou une différence de concentration en ions métalliques étrangers.

3. Procédé suivant la revendication 1 ou 2, **caractérisé en ce qu'**on fait arriver des solutions de complexes de nickelamines [Ni(NH₃)ₙ(H₂O)₆₋ₙ]²⁺ dans une liqueur-mère alcaline, des solutions ayant un degré de complexation moyen n différent arrivant en des endroits différents.

4. Procédé suivant la revendication 3, **caractérisé en ce que** la différence de degré de complexation n est produite par une différence de température et/ou par une différence de rapport Ni/NH₃ des solutions.

5. Procédé suivant l'une des revendications 1 à 4, **caractérisé en ce qu'**on fait arriver une solution de sel de nickel et une solution alcaline aux différents endroits, la concentration en hydroxyde alcalin des solutions alcalines étant différente.

6. Procédé suivant la revendication 5, **caractérisé en ce que** les solutions de sels de nickel et les solutions alcalines sont amenées concentriquement.

7. Procédé suivant l'une des revendications 1 à 6, **caractérisé en ce qu'**on utilise comme ions métalliques étrangers des ions trivalents à rayon ionique très différent de Ni, tels que B, Al, In, Tl, Sc, Y, La, des lanthanides et/ou Bi en quantités de 0,1 à 3 % en poids par rapport à Ni.

8. Procédé suivant l'une des revendications 1 à 7, **caractérisé en ce qu'**au moins l'un des points d'introduction est muni d'un tube d'écoulement, de manière qu'il ne se produise tout d'abord qu'un mélange avec une partie localement protégée de la liqueur-mère.

9. Procédé suivant l'une des revendications 1 à 8, **caractérisé en ce que** l'amenée s'effectue sous turbulence élevée au niveau d'au moins un point d'introduction.

10. Procédé suivant l'une des revendications 1 à 9, **caractérisé en ce que** des substances dopantes divalentes telles que Co, Zn, Mg, Ca, Sr et/ou Ba sont incorporées en quantité de 0,3 à 7 % en poids à l'hydroxyde de nickel en vue d'optimiser les propriétés techniques d'application de la matière formée d'hydroxyde de nickel dans l'électrode.

11. Hydroxyde de nickel, **caractérisé en ce que** les cristaux primaires présentent une répartition de diamètre des particules qui est au moins bimodale.

12. Hydroxyde de nickel suivant la revendication 11, **caractérisé en ce qu'**il présente une capacité d'au moins 107 % par rapport au transfert d'un électron du nickel dans le second cycle de charge/décharge.

13. Hydroxyde de nickel suivant la revendication 12, **caractérisé en ce que** la capacité dans le second cycle de charge/décharge atteint au moins 108 %.

14. Hydroxyde de nickel suivant l'une des revendications 11 à 13, **caractérisé en ce qu'**il présente une capacité d'au moins 95 % par rapport au transfert d'un électron du nickel dans le 30^{ème} cycle de charge/décharge.

15. Utilisation d'hydroxyde de nickel suivant l'une des revendications 11 à 14, comme matière active dans des piles rechargeables.
